# DEMANDE DE BREVET EUROPEEN

(11) **EP 1 786 086 A2**
(43) Date de publication de la demande: **16.05.2007**
(21) Numéro de dépôt: 06301144.9
(22) Date de dépôt: 10.11.2006
(51) Int. Cl.: H02K 7/102

(54) **Ensemble d'une machine électrique tournante et d'un frein**

(30) Priorité: 14.11.2005 FR 0553454
(71) Demandeur: MOTEURS LEROY-SOMER, 16000 Angouleme (FR)
(72) Inventeur: Coupart, Eric, 16000 Angouleme (FR)
(74) Mandataire: Tanty, François

(57) **Abrégé**

La présente invention concerne une machine électrique comportant :
- un rotor (20) extérieur comportant un arbre (21) et une portion d'entraînement (22) d'au moins un câble,
- au moins un frein (12) comportant au moins un disque de frein (13) entraîné par l'arbre, et
- un stator (30) ayant des enroulements (32) situés axialement entre le disque de frein (13) et la portion d'entraînement (22), la portion d'entraînement (22) étant monobloc avec l'arbre du rotor (21) ou étant rapportée sur l'arbre (21).

## Description

La présente invention concerne les machines électriques tournantes destinées notamment à l'entraînement des cabines d'ascenseurs. L'invention concerne plus particulièrement mais non exclusivement les machines ayant un encombrement relativement faible et comportant au moins un frein.

La demande de brevet JP 11-079 627 décrit un moteur d'ascenseur comportant un rotor et un stator, l'entraînement du câble étant réalisé par une poulie montée sur un réducteur de vitesse.

Il existe un besoin pour bénéficier d'une machine dont la fabrication soit relativement aisée et économique, de fonctionnement fiable et capable d'assurer éventuellement une fonction de parachute ascensionnel dans le cas de l'utilisation pour entraîner une cabine d'ascenseur.

De plus, il existe un besoin pour réduire l'encombrement des machines électriques tournantes, par exemple afin de pouvoir les insérer dans une structure de support creuse.

L'invention vise à répondre à tout ou partie de ces besoins.

L'invention a ainsi pour objet, selon l'un de ses aspects, une machine électrique comportant :
- un rotor extérieur comportant un arbre et une portion d'entraînement d'au moins un câble,
- au moins un frein comportant au moins un disque de frein entraîné par l'arbre, et
- un stator comportant des enroulements situés axialement entre le disque de frein et la portion d'entraînement.

L'encombrement d'une telle machine peut être relativement faible et la disposition relative du stator peut faciliter sa mise en place dans une structure de support creuse.

La portion d'entraînement peut être monobloc avec l'arbre du rotor, ou en variante disposée directement sur l'arbre, autrement dit rapporté sur celui-ci, avec une seule interface mécanique.

L'entraînement de la portion d'entraînement s'effectue sans engrenage, ce qui accroît la fiabilité et peut réduire le bruit de fonctionnement, simplifier la fabrication et diminuer l'encombrement.

La machine peut notamment être dépourvue de réducteur de vitesse.

La portion d'entraînement peut être pourvue, dans un exemple de mise en oeuvre de l'invention, d'au moins une gorge annulaire pour l'entraînement d'au moins un câble. En variante, la portion d'entraînement peut être destinée à recevoir une pluralité de bagues et de rondelles alternées formant au moins une gorge pour l'entraînement d'au moins un câble, lequel comporte par exemple au moins un matériau synthétique, par exemple du Kevlar®. Ledit au moins un câble peut être en Kevlar®.

Le terme « câble » ne doit pas être compris avec un sens limitatif et englobe des fils de toutes sections et structures, par exemple composite.

Dans un exemple de mise en oeuvre de l'invention, l'arbre est réalisé en métal, par exemple en acier, notamment en acier usiné.

Le ou les disques de frein peuvent être engagés sur une portion cannelée de l'arbre.

Selon un aspect de l'invention parmi d'autres, les cannelures de la portion cannelée peuvent être usinées sur l'arbre.

Le diamètre extérieur de la portion d'entraînement peut être au moins triple de celui de la portion cannelée, voire être supérieur au diamètre de la portion cannelée d'un facteur d'au moins 3,5, voire au moins 4, mieux 4,5, encore mieux 5.

La machine peut comporter, éventuellement, au moins un flasque d'extrémité, par exemple de forme carrée ou rectangulaire, ce qui peut faciliter son insertion dans une structure de support creuse de section transversale intérieure carrée ou rectangulaire.

La machine peut comporter un seul flasque d'extrémité ou deux flasques d'extrémité. La machine peut être dépourvue de flasque d'extrémité adjacent à la portion d'entraînement.

La machine peut comporter plus d'un frein, par exemple deux freins.

Le ou les freins peuvent être des freins électromagnétiques, par exemple à manque de courant.

Le rotor peut comporter des aimants permanents.

Les aimants peuvent être fixés à une paroi du rotor par collage ou autrement, notamment par serrage. Le rotor peut être dépourvu de tôles magnétiques.

La machine peut être un moteur synchrone ou asynchrone.

Le stator peut être bobiné sur dents. En variante, le bobinage du stator pourrait être distribué.

La portion d'entraînement peut être supportée par un roulement.

L'arbre peut comporter un évidement central qui s'étend axialement sur au moins la majeure partie du stator.

L'arbre peut comporter un évidement central présentant un diamètre intérieur supérieur au diamètre extérieur de la portion de l'arbre sur laquelle est engagé ledit au moins un disque de frein. Cet évidement central peut recevoir un roulement.

L'arbre peut être supporté par un flasque d'extrémité de la machine, par l'intermédiaire d'un roulement dans lequel est engagé l'arbre, ou reposer sur le stator par l'intermédiaire d'au moins un roulement, voire deux roulements, dans lequel ou lesquels est engagé l'arbre.

La portion d'entraînement peut être monobloc avec l'arbre du rotor ou en variante être rapportée, étant par exemple emmanchée sur une portion conique de l'arbre et par exemple maintenue par au moins une clavette.

Le disque de frein peut être monobloc avec l'arbre du rotor ou être rapporté sur celui-ci, étant par exemple soudé sur celui-ci.

La portion d'entraînement peut être reliée au disque de frein par l'arbre, de sorte que le frein peut agir sur la portion d'entraînement avec une seule interface mécanique et une seule transmission de couple, ce qui offre une fiabilité accrue.

Le rotor peut comporter des orifices de ventilation, par exemple ménagés dans le rotor entre une paroi tubulaire portant les aimants et l'arbre. Les orifices de ventilation sont par exemple réalisés dans une paroi transversale reliant la paroi tubulaire à l'arbre, par exemple en regard de têtes de bobines du stator. En variante, la machine peut comporter un ventilateur extérieur, par exemple entraîné par un moteur annexe.

L'invention a encore pour objet, selon un autre de ses aspects, indépendamment ou en combinaison avec ce qui précède, une machine électrique comportant :
- un corps de stator agencé pour se fixer à l'intérieur d'une structure de support creuse par des zones de fixation,
- au moins une première zone de fixation étant située inférieurement et au moins une deuxième zone de fixation étant située supérieurement et/ou sur le côté du corps de stator, et
- un rotor extérieur comportant un arbre tournant dans le corps de stator.

Cette machine peut présenter en outre l'une quelconque des caractéristiques mentionnées précédemment.

La ou les zones de fixation peuvent être agencées pour permettre une fixation amovible, par exemple grâce à des vis et/ou écrous.

La ou les premières zones de fixation permettent une reprise du poids de la machine et du ou des câbles par la structure creuse et la ou les deuxième zones de fixation permettent une reprise du couple qui évite de solliciter outre mesure la ou les premières zones de fixation et peut faciliter le montage de la machine sur la structure de support creuse. La machine peut comporter une deuxième zone de fixation sur chacun des côtés du corps de stator.

La machine peut comporter au moins un amortisseur disposé contre le corps de stator dans au moins l'une des zones de fixation, un amortisseur étant par exemple disposé contre le corps de stator dans la deuxième zone de fixation et un amortisseur étant par exemple disposé contre le corps de stator dans la première zone de fixation. Un amortisseur peut par exemple être disposé contre le corps de stator dans chaque zone de fixation.

Chaque amortisseur peut être configuré pour amortir la transmission des vibrations entre la machine et la structure de support creuse. L'amortisseur peut comporter un bloc en élastomère, par exemple de forme annulaire.

L'invention a encore pour objet un assemblage comportant :
- une structure de support creuse, et
- une machine telle que définie plus haut, au moins partiellement engagée dans la structure de support creuse, étant par exemple fixée sur celle-ci de la manière définie ci-dessus.

La machine peut être disposée non entièrement dans la structure creuse. Le ou les freins peuvent par exemple être à l'extérieur de la structure de support creuse, étant disposés par exemple en porte-à-faux.

La structure de support peut comporter une ouverture pour le passage du ou des câbles coopérant avec la portion d'entraînement.

De plus, il peut être avantageux de disposer d'au moins une zone de fixation dans un coin de la structure de support creuse.

Le corps de stator peut comporter un tube creux dans lequel passe l'arbre du rotor, et des pattes venant recouvrir le rotor extérieur et sur lesquelles sont situées les zones de fixation, par exemple au moins une patte située inférieurement et au moins une patte située supérieurement et/ou sur le côté du corps de stator.

L'invention pourra être mieux comprise à la lecture de la description détaillée qui va suivre, d'exemples de réalisation de celle-ci et à l'examen du dessin annexé, sur lequel :
- la figure 1 est une coupe longitudinale, schématique et partielle, d'un exemple de machine réalisée conformément à l'invention,
- la figure 2 est une vue en perspective de l'exemple de réalisation de la figure 1,
- la figure 3 est une vue selon la flèche III de la machine des figures 1 et 2,
- la figure 4 est une coupe longitudinale, analogue à la figure 1, d'une variante de réalisation,
- la figure 5 est une vue schématique selon la flèche V de la machine de la figure 4,
- la figure 6 est une vue schématique et partielle selon la flèche VI de la machine des figures 4 et 5, et
- les figures 7 à 11 sont des coupes longitudinales, schématiques et partielles, d'exemples de machines réalisées conformément à l'invention.

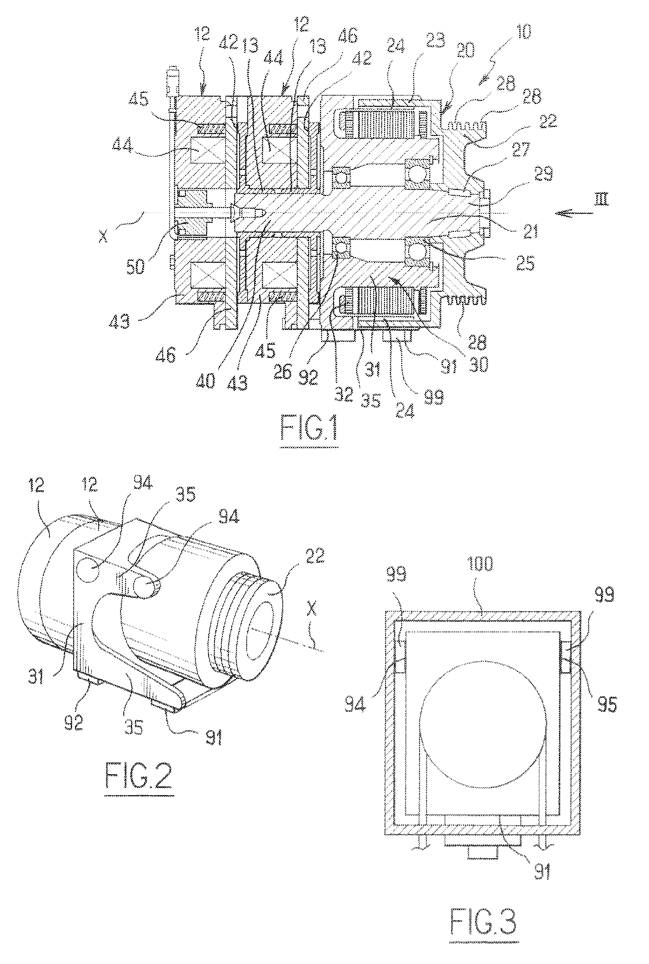

La machine électrique 10 représentée à la figure 1 est destinée par exemple à l'entraînement de câbles d'ascenseurs et comporte un rotor extérieur 20 comportant un arbre 21 et une portion d'entraînement 22 d'au moins un câble (non représenté).

Le rotor 20 tourne autour d'un axe de rotation X qui est aussi l'axe longitudinal de la machine 10 dans l'exemple considéré.

La machine 10 comporte en outre, d'un côté de celle-ci, au moins un frein électromagnétique 12 et, dans l'exemple considéré, deux freins électromagnétiques 12, comportant chacun un disque de frein 13.

La machine 10 comporte également un stator 30 ayant des enroulements 32 situés axialement entre les disques de frein 13 et la portion d'entraînement 22 et comportant un corps de stator 31.

L'arbre 21 du rotor 20 est monolithique, étant par exemple en acier usiné, tournant sur des roulements 25, 26 portés par le corps de stator 31.

La portion d'entraînement 22 est dans l'exemple décrit pourvue de gorges annulaires 28 pour l'entraînement des câbles.

Les gorges annulaires 28 sont par exemple adaptées à recevoir des câbles de section sensiblement circulaire, constitués de fils métalliques et/ou synthétiques torsadés. Les câbles peuvent comporter des brins de section circulaire ou non, par exemple de diamètre différent ou réalisés dans des matériaux différents. Les câbles peuvent par exemple être en Kevlar®.

Une gorge 28 peut comporter un fond de forme partiellement circulaire en section. En variante, une gorge 28 peut comporter deux plans convergeant vers l'axe de rotation de la machine. L'écartement entre deux gorges de la poulie peut être constant ou non constant, le cas échéant.

Dans l'exemple de réalisation illustré à la figure 1, la portion d'entraînement 22 est emmanchée sur une portion conique 29 de l'arbre 21 du rotor 20 et maintenue par une clavette 27. La portion d'entraînement 22 peut par exemple comporter un moyeu cranté, maintenu par exemple par un écrou à languette.

D'autre part, la portion d'entraînement 22 est réalisée monobloc avec une paroi tubulaire 23 du rotor, sur laquelle sont collés des aimants permanents 24.

Ces derniers pourraient, en variante, être insérés dans des logements correspondants ménagés dans le rotor 20.

Les aimants permanents 24 interagissent avec les pôles du stator 30 définis par les enroulements 32. Le stator 30 est par exemple du type à bobinage concentré, comportant des dents, chaque dent recevant un enroulement 32 dont l'axe est confondu avec celui de la dent. Bien entendu, on ne sort pas du cadre de la présente invention lorsque le stator 30 est à bobinage distribué.

L'arbre 21 du rotor 20 comporte, du côté opposé à la portion d'entraînement 22, une portion cannelée 40 qui s'étend axialement au-delà des enroulements 32 du stator 30, comportant des cannelures s'étendant parallèlement à l'axe longitudinal X de la machine.

Sur cette portion cannelée 40 sont engagés les moyeux des disques de frein 13 appartenant au frein 12. Ces disques 13 comportent en périphérie des garnitures 42, de façon conventionnelle.

Les freins 12 comportent des culasses 43 qui comportent chacune un logement 44 recevant un électroaimant et des logements 45 recevant des ressorts qui appliquent, en l'absence de champ magnétique généré par l'électroaimant, une armature 46 contre le disque de frein correspondant. Des entretoises non représentées sont prévues pour assurer le guidage en translation des armatures 46.

Un codeur 50 électro-optique ou à détection magnétique peut être monté à une extrémité de l'arbre 21 pour détecter la rotation de celui-ci.

La machine qui vient d'être décrite peut être destinée à être insérée dans une structure de support creuse 100.

La machine peut alors comporter des zones de fixation, dont avantageusement au moins une première zone de fixation qui est située inférieurement et au moins une deuxième zone de fixation qui est située supérieurement et/ou sur le côté du corps de stator 31.

Dans la variante illustrée aux figures 1 à 3, la machine peut comporter des deuxièmes zones de fixation 94, 95 situées sur chacun des côtés du corps de stator 31.

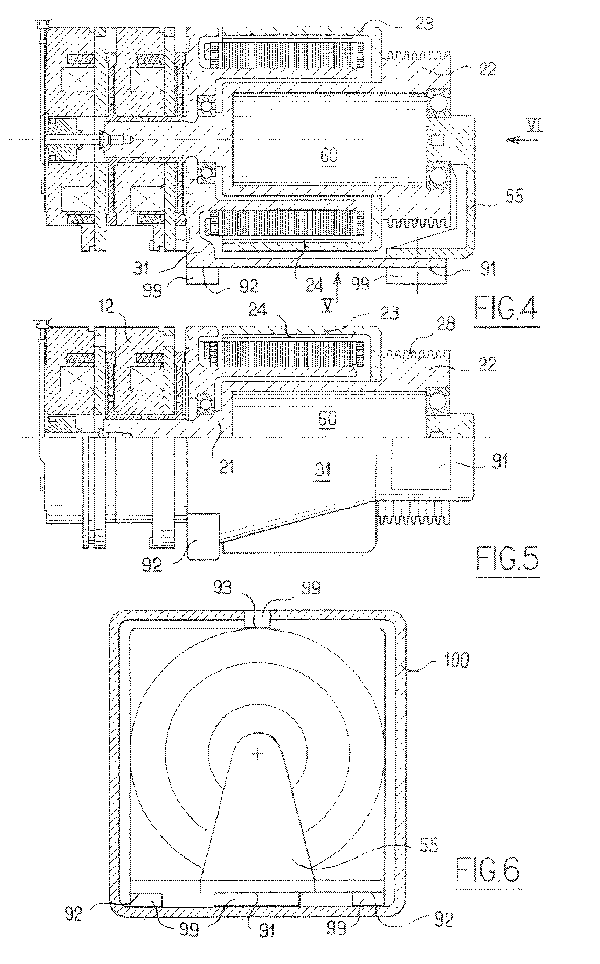

On voit d'autre part sur les figures 2 et 3 que le corps de stator 31 peut comporter un tube creux dans lequel passe l'arbre 21 du rotor 20, et des pattes 35 venant couvrir partiellement le rotor extérieur sans gêner sa rotation, et sur lesquelles sont situées les zones de fixation.

Le corps de stator 31 peut comporter des pattes 35 situées inférieurement et/ou supérieurement et sur le côté du corps de stator 31.

On a représenté aux figures 5 à 7 une variante de réalisation qui diffère de celle de la figure 1 par le fait que les aimants permanents 24 sont fixés sur une paroi 23 du rotor non monobloc avec la portion d'entraînement 22.

Des premières zones de fixation 91 et 92 sont situées dans l'exemple considéré respectivement inférieurement du côté de la partie d'entraînement et inférieurement du côté du ou des freins 12.

De plus, la machine illustrée aux figures 4 à 6 comporte une deuxième zone de fixation 93, située supérieurement.

Dans les exemples décrits aux figures 1 à 6, dans chacune des zones de fixation 91, 92, 93, 94 et 95, la machine comporte un amortisseur 99 disposé contre le corps de stator, l'amortisseur étant destiné à venir en contact avec la structure de support creuse 100, comme illustré aux figures 3 et 6.

Les amortisseurs sont configurés pour amortir la transmission des vibrations entre la machine 10 et la structure de support creuse 100. Les amortisseurs peuvent par exemple comporter un bloc en élastomère, par exemple de forme annulaire afin de faciliter le passage d'un organe de fixation.

Dans l'exemple illustré à la figure 1, l'arbre 21 repose sur le stator 30 par l'intermédiaire des deux roulements 25, 26 et la machine est dépourvue de flasque d'extrémité.

L'absence de flasque peut rendre plus aisé d'installer les câbles sur le rotor ou de les enlever. Il n'est en particulier pas nécessaire de les détacher de leur charge pour les enlever du rotor.

Bien entendu, on ne sort pas du cadre de la présente invention s'il en est autrement.

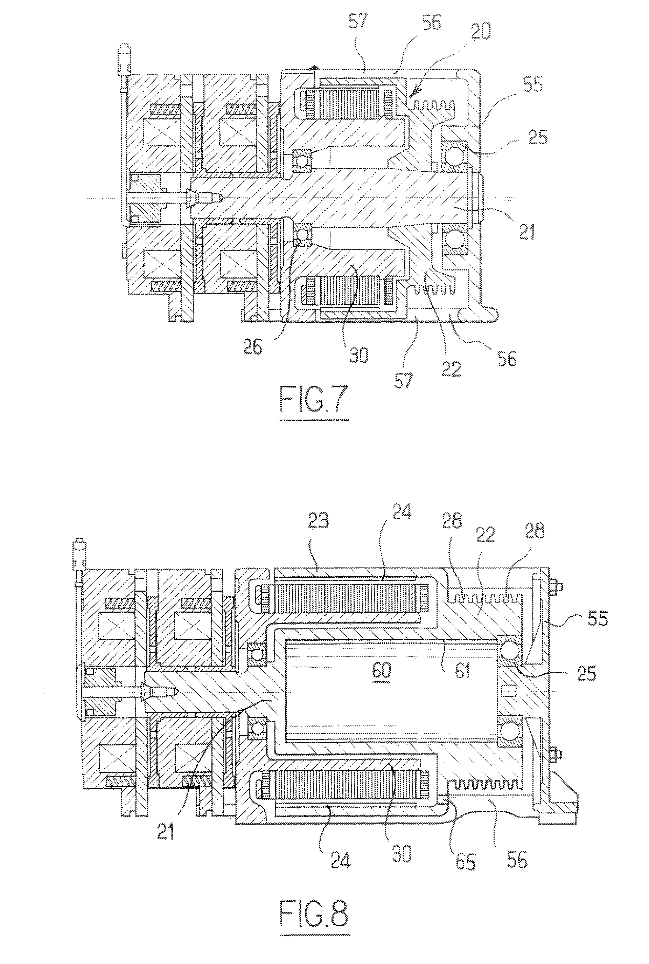

A titre d'exemple, on a illustré à la figure 7 une machine qui diffère de celle illustrée à la figure 1 par le fait que l'arbre 21 repose sur un flasque d'extrémité 55 de la machine par l'intermédiaire du roulement 25, dans lequel est engagé l'arbre 21.

Le flasque 55 est relié par des colonnettes 56 au stator 30, des ouvertures 57 étant ménagées entre les colonnettes 56 pour permettre la rotation du rotor 20.

Dans une autre variante de réalisation, l'arbre peut comporter un évidement central qui s'étend axialement sur au moins la majeure partie du stator, de sorte que l'arbre repose sur le flasque d'extrémité de la machine 55, l'arbre 21 étant supporté intérieurement par le roulement 25, comme illustré à la figure 8.

On a représenté sur cette figure une machine dans laquelle l'arbre 21 comporte un évidement central 60 qui s'étend axialement sur presque toute la longueur du stator 30.

L'évidement central 60 pourrait encore s'étendre axialement sur toute la longueur du stator 30.

L'évidement central 60 procure un allègement du rotor et diminue la quantité de matière de celui-ci, donc en réduit le coût.

L'évidement central 60 est ouvert du côté du flasque 55 et vient en appui par une surface radialement intérieure 61 contre le roulement 25.

Une partie des gorges 28 de la portion d'entraînement 22 entoure le roulement 25, ce qui améliore la reprise des efforts.

L'exemple de réalisation de la figure 8 diffère encore de ceux illustrés aux figures 1 et 7 par le fait que la portion d'entraînement 22 est monobloc avec l'arbre 21, de sorte que la portion d'entraînement 22 est en contact avec la surface radialement extérieure du roulement 25.

La machine de la figure 8 présente l'avantage de n'avoir qu'une interface mécanique de transmission de couple entre la portion d'entraînement 22 et les disques de frein 13, par l'intermédiaire de l'arbre 21, ce qui accroît la sécurité.

Dans les exemples qui viennent d'être décrits, la portion d'entraînement 22 comporte des gorges 28 pour l'entraînement des câbles. On ne sort pas du cadre de la présente invention si la portion d'entraînement est réalisée différemment.

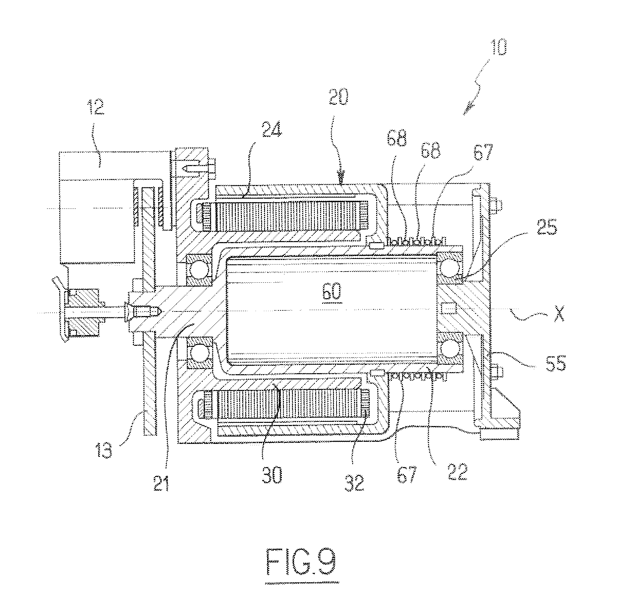

A titre d'exemple, on a illustré à la figure 9 une machine qui diffère des précédentes par le fait que la portion d'entraînement 22 de l'arbre 21 comporte une surface cylindrique plane destinée à recevoir une pluralité de bagues 68 et de rondelles 67 disposées alternativement. Les bagues 68 sont par exemple réalisées en bakélite et sont destinées à supporter les câbles, les rondelles 67 disposées entre les bagues 68 formant des guides de part et d'autre des câbles de manière à maintenir ces derniers sur les bagues. Une telle configuration peut être particulièrement utile dans le cas où les câbles sont réalisés en Kevlar®.

La machine de la figure 9 diffère encore des précédentes par le fait que le frein 12 est un frein à mâchoires, qui n'est pas disposé sur l'axe longitudinal X de la machine.

Le disque 13 est disposé sur l'arbre 21 tandis que le frein 12 est disposé à la périphérie de la machine. De plus, la machine de la figure 9 ne comporte qu'un seul frein.

Le ou les disques de frein 13 pourraient être réalisés en variante d'un seul tenant avec l'arbre 21 de la machine, de manière à diminuer le nombre d'interfaces mécaniques entre la portion d'entraînement 22 et le ou les freins 12.

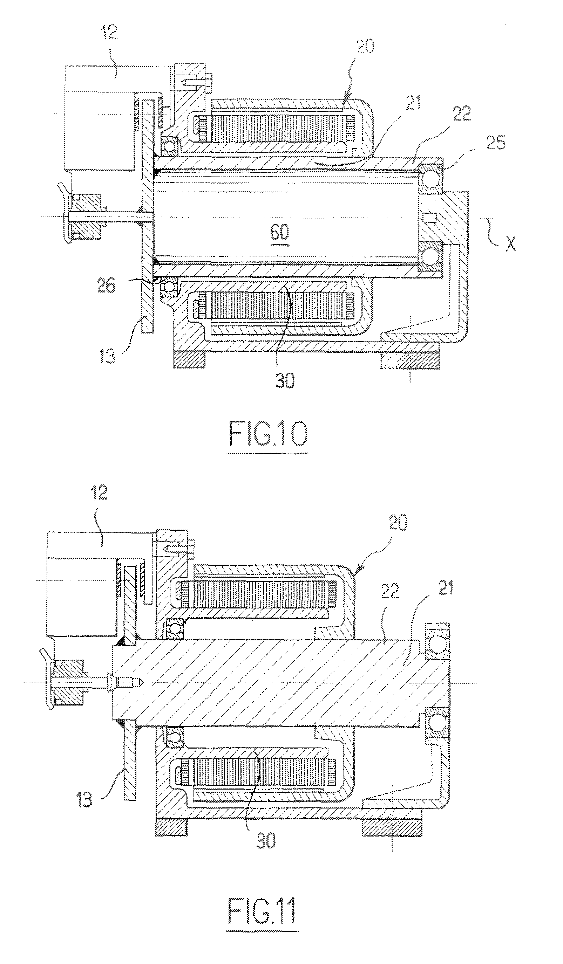

On a illustré à la figure 10 une machine analogue à celle de la figure 9, qui en diffère par le fait que l'évidement central 60 s'étend sur toute la longueur de l'arbre 21.

Le roulement 25 est disposé à l'intérieur de l'arbre 21 tandis que le roulement 26 est disposé à l'extérieur de l'arbre.

Une telle configuration peut permettre de démonter aisément le roulement arrière 26 et de disposer d'un arbre 21 solidaire du disque de frein 13, ce dernier étant par exemple soudé sur l'arbre 21.

De plus, on comprend à l'observation de la figure 10 qu'il est aisé d'installer le ou les câbles sur la portion d'entraînement 22 ou de les enlever de la portion d'entraînement 22 sans les détacher de la charge qu'ils portent.

On a illustré à la figure 11 une variante de réalisation dans laquelle l'arbre 21 est plein et dans lequel les roulements 25 et 26 sont tous deux disposés à l'extérieur de l'arbre 21.

Le disque de frein 13 peut être rendu solidaire de l'arbre en le soudant sur celui-ci.

Cette configuration peut apporter les mêmes avantages que ceux qui viennent d'être mentionnés.

Dans toutes les machines qui viennent d'être décrites, le rotor peut comporter des orifices de ventilation 65, par exemple orientés axialement et ménagés entre la portion d'entraînement 22 et les aimants 24. Ces orifices 65 ne sont apparents qu'à la figure 8, mais toutes les machines des autres figures pourraient en comporter.

La machine de la figure 8 pourrait encore en être dépourvue.

En variante ou additionnellement, le refroidissement peut être assuré au moins partiellement par un ventilateur entraîné par un moteur indépendant.

Bien entendu, l'invention n'est pas limitée aux exemples qui viennent d'être décrits.

En particulier, la machine peut être réalisée avec un seul frein ou avec plus de deux freins.

Le cas échéant, la portion d'entraînement peut ne comporter qu'une seule gorge et ne recevoir qu'un seul câble.

Dans un souci de simplification, on a représenté les moteurs de certaines figures sans amortisseurs, mais ces moteurs peuvent bien sûr en comporter.

L'expression « comportant un » doit être comprise comme étant synonyme de « comportant au moins un », sauf si le contraire est spécifié.

## Revendications

1. Machine électrique comportant :
- un rotor (20) extérieur comportant un arbre (21) et une portion d'entraînement (22) d'au moins un câble,
- au moins un frein (12) comportant au moins un disque de frein (13) entraîné par l'arbre, et
- un stator (30) ayant des enroulements (32) situés axialement entre le disque de frein (13) et la portion d'entraînement (22), la portion d'entraînement (22) étant monobloc avec l'arbre du rotor (21) ou étant rapportée sur l'arbre (21) avec une seule interface mécanique.

2. Machine selon la revendication précédente, dans laquelle la portion d'entraînement (22) est pourvue d'au moins une gorge annulaire (28) pour l'entraînement d'au moins un câble.

3. Machine selon la revendication 1, dans laquelle la portion d'entraînement (22) est destinée à recevoir une pluralité de bagues (68) et de rondelles (67) alternées formant au moins une gorge pour l'entraînement d'au moins un câble.

4. Machine selon l'une quelconque des revendications précédentes, dans laquelle le disque de frein (13) est engagé sur une portion cannelée de l'arbre (21).

5. Machine selon la revendication précédente, dans laquelle le diamètre extérieur de la portion d'entraînement (22) est au moins triple de celui de la portion cannelée.

6. Machine selon la revendication précédente, dans laquelle le diamètre extérieur de la portion d'entraînement (22) est supérieur au diamètre extérieur de la portion cannelée d'un facteur d'au moins 3,5, voire au moins 4, mieux 4,5, encore mieux 5.

7. Machine selon l'une quelconque des revendications précédentes, comportant au moins un flasque d'extrémité (55), de forme carrée ou rectangulaire.

8. Machine selon l'une quelconque des revendications précédentes, comportant un seul flasque (55) d'extrémité.

9. Machine selon l'une quelconque des revendications précédentes, comportant deux flasques d'extrémité.

10. Machine selon l'une quelconque des revendications précédentes, comportant un seul frein (12).

11. Machine selon l'une quelconque des revendications 1 à 9, comportant deux freins (12).

12. Machine selon l'une quelconque des revendications précédentes, dans laquelle le rotor (20) comporte des aimants permanents (24).

13. Machine selon la revendication précédente, dans laquelle les aimants permanents (24) sont fixés à une paroi du rotor par collage.

14. Machine selon l'une quelconque des revendications précédentes, dans laquelle le stator (30) est bobiné sur dents.

15. Machine selon l'une quelconque des revendications précédentes, dans laquelle la portion d'entraînement (22) est supportée par un roulement (25).

16. Machine selon l'une quelconque des revendications précédentes, dans laquelle l'arbre (21) comporte un évidement central (60) qui s'étend axialement sur au moins la majeure partie du stator (30).

17. Machine selon l'une quelconque des revendications précédentes, dans laquelle l'arbre (21) comporte un évidement central (60) présentant un diamètre intérieur supérieur au diamètre extérieur de la portion de l'arbre sur laquelle est engagé ledit au moins un disque de frein (13).

18. Machine selon l'une quelconque des revendications 1 à 14, dans laquelle l'arbre (21) repose sur un flasque d'extrémité (55) de la machine par l'intermédiaire d'un roulement (25) dans lequel est engagé l'arbre.

19. Machine selon l'une quelconque des revendications 1 à 14, dans laquelle l'arbre (21) repose sur le stator (30) par l'intermédiaire d'au moins un roulement dans lequel est engagé l'arbre (21).

20. Machine selon l'une quelconque des revendications précédentes, dans laquelle la portion d'entraînement (22) est monobloc avec l'arbre du rotor (21).

21. Machine selon l'une quelconque des revendications 1 à 19, dans laquelle la portion d'entraînement (22) est rapportée sur l'arbre (21) du rotor.

22. Machine selon la revendication précédente, dans laquelle la portion d'entraînement (22) est emmanchée sur une portion conique de l'arbre (21).

23. Machine selon l'une quelconque des revendications précédentes, dans laquelle le disque de frein (13) est soudé à l'arbre (21) du rotor.

24. Machine selon l'une quelconque des revendications précédentes, dans laquelle le rotor (20) comporte des orifices (65) de ventilation.

25. Machine selon l'une quelconque des revendications précédentes, étant dépourvue de flasque d'extrémité adjacent à la portion d'entraînement.
